# EUROPEAN PATENT APPLICATION

(11) **EP 4 616 926 A1**
(43) Date of publication of application: **17.09.2025**
(21) Application number: 25158911.5
(22) Date of filing: 19.02.2025
(51) Int. Cl.: B01D 46/00, B01D 46/24, B01D 46/44, B01D 46/64, B01D 46/70, B01D 46/90

(54) **FILTER DEVICES FOR ADDITIVE MANUFACTURING APPARATUSES**

(30) Priority: 14.03.2024 US 202418605296
(71) Applicant: Concept Laser GmbH, 96215 Lichtenfels (DE)
(72) Inventor: JÄGER, Olaf, 96215 Lichtenfels (DE); PONTILLER-SCHYMURA, Peter, 96215 Lichtenfels (DE); HADERLEIN, Hannes, 96215 Lichtenfels (DE)
(74) Representative: Hafner & Kohl PartmbB

(57) **Abstract**

Disclosed herein are filter (193a) devices for additive manufacturing apparatuses that include a filter device inlet (112) that receives a process medium from an additive manufacturing apparatus, at least one filter module (102a) that separates particulates (186) and inert gas from the process medium, the at least one filter module (102a) including a filter housing (104) with a filter housing inlet (114) that is fluidly connected to the filter device inlet (112) to receive the process medium, a primary filter (156) mounted within an interior of the filter housing (104), a rotational nozzle (170) mounted to the filter housing (104) and at least partially positioned within the primary filter (156), a removable container (120) fluidly connected to the filter housing (104), and a passivation system fluidly connected to both the filter housing (104) and the removable container (120), and a filter device inert gas outlet (116) that discharges the inert gas.

## Description

### TECHNICAL FIELD

The present specification generally relates to additive manufacturing apparatuses and, more specifically, to filter devices and methods of filtering particulates and inert gas from a processable medium.

### BACKGROUND

Additive manufacturing apparatuses may be utilized to build an object from a build material, such as organic or inorganic powders, in a layer-wise manner by sintering or melting the powders with a laser beam. When irradiating with the laser beam, contaminants such as fumes, soot, vapors, gases, spatter, particulates, and/or condensate may be formed which spread into the build chamber and which are picked up by a protective or inert gas flow traveling through the build chamber. In order to save inert gas, an air circulation system is generally used, in which the protective gas coming from the build chamber is cleaned in a filter system and the filtered inert gas is supplied to the build chamber again. As the filters become increasingly contaminated with particulates during operation, the filters must be cleaned or replaced at certain intervals. As such, the protective gas cycle is suspended, the filter system is opened, and the filter units are removed and cleaned or replaced. After installing cleaned or new filter units, the filter system is closed and the protective gas cycle begins operation again.

Moreover, the contaminants produced during laser sintering or melting can be flammable, and when removing the filter units, these contaminants are at risk for exposure to atmospheric oxygen which may cause ignition of the contaminants and thus ignition of the filter units. Therefore, the filter units are passivated immediately after removal from the filter system and usually disposed of. The materials used for passivation often require the addition of special components to handle these materials, adding to the overall complexity of the system. In addition, the operator who removes the filter units must be sufficiently protected during removal. Therefore, relatively expensive and complicated protective measures are necessary when removing the filter units.

Accordingly, a need exists for improved filter devices which address the issues described above and can be cleaned and passivated without having to stop the build process in the build chamber.

### BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:
FIG. 1 schematically depicts a perspective view of a filter device for use with an associated additive manufacturing apparatus, according to one or more embodiments shown and described herein;
FIG. 2 schematically depicts a partial cross-section view of the filter device of FIG. 1, according to one or more embodiments shown and described herein;
FIG. 3 schematically depicts a simplified cross-section view of one filter module of the filter device of FIG. 1, according to one or more embodiments shown and described herein;
FIG. 4 schematically depicts a cross-section view of an upper hood portion of the filter device of FIG. 1, according to one or more embodiments shown and described herein;
FIG. 5 schematically depicts a cross-section view of a lower enclosure portion of the filter device of FIG. 1, according to one or more embodiments shown and described herein;
FIG. 6 schematically depicts another simplified cross-section view of one filter module of the filter device of FIG. 1, according to one or more embodiments shown and described herein;
FIG. 7 schematically depicts a top view of the filter device of FIG. 1 which includes an additional pair of fluidly connected filter modules, according to one or more embodiments shown and described herein;
FIG. 8 schematically depicts various components of the filter device of FIG. 1 in communication with an electronic control unit, according to one or more embodiments shown and described herein; and
FIG. 9 depicts a flow diagram depicting a method of operating the filter device of FIG. 1, according to one or more embodiments shown and described herein.

### DETAILED DESCRIPTION

Embodiments described herein are directed to filter devices for additive manufacturing apparatuses and methods of cleaning or filtering process gasses generated during a build process of the additive manufacturing apparatus. The filter devices of the present disclosure provide a solution for effective cleaning of the specific condensate generated during the additive build process, while also providing for the safe passivation of reactive condensate and soot using inert gas and air. Additionally, the filter devices described herein provide for continuous filter cleaning and passivation without interruption by permitting a plurality of filter modules to be used in combination, each drawing processable medium from an additive manufacturing apparatus. Specifically, one filter module may be used to clean a filter while the other filter module may be used to passivate the processable medium. Alternatively, when filter cleaning is not necessary, each filter module may be used to passivate the processable medium. In embodiments, the filters may be cleaned within each filter module without removal by operating a rotating nozzle that operates to dislodge particulates from within the filter. Whenever possible, the same reference numerals will be used throughout the drawings to refer to the same or like parts.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation, and; the number or type of embodiments described in the specification.

As used herein, the singular forms "a," "an" and "the" include plural referents unless the context clearly dictates otherwise. Thus, for example, reference to "a" component includes aspects having two or more such components, unless the context clearly indicates otherwise.

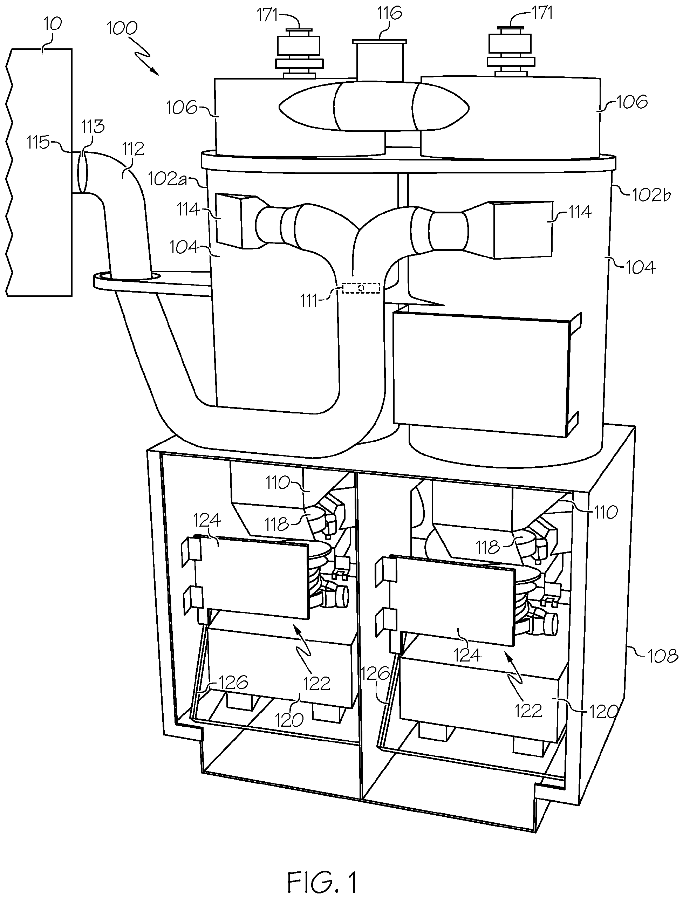

Referring now to FIG. 1, a filter device 100 for an additive manufacturing apparatus 10 is illustrated according to one or more embodiments described herein. The filter device 100 generally includes at least two filter modules 102a, 102b, with each filter module 102a, 102b sharing a substantially similar construction and arrangement of components, and each filter module 102a, 102b adapted to receive, filter, and passivate a processable medium. However, in some embodiments, it is contemplated that the filter device 100 may include only one filter module or more than two filter modules. The processable medium is generated in the build chamber of an associated additive manufacturing apparatus, such as additive manufacturing apparatus 10, during the metal printing process and may include an inert gas or combination of inert gases that is introduced to and flows through the build chamber to provide an inert environment for the metal printing process. As the inert gas or combination of inert gases flows through the build chamber, metal powder may be swept up and carried by the gas flow to form at least part of the processable medium. The processable medium generally further includes contaminants such as, for example, fumes, soot, vapors, gases, spatter, particulates, and/or condensate formed as a result of the metal printing process and, more particularly, as a result of the sintering or melting of metal powder by the laser beam of the associated additive manufacturing apparatus 10. These contaminants are picked up by the flow of inert gas through the build chamber, and the metal powder, the contaminants, and the inert gas collectively form the processable medium that is received by the filter device 100.

As described in further detail below, each module 102a, 102b of the filter device 100 is adapted to filter the processable medium and separate the contaminants from the inert gas such that the inert gas can be reintroduced into the build chamber of the associated manufacturing device. Additionally, each module 102a, 102b of the filter device 100 is adapted to filter the processable medium and separate the metal powder from the inert gas such that the metal powder can be reused or recycled. Moreover, each module 102a, 102b of the filter device 100 is adapted to passivate the contaminants, and more particularly, passivate the reactive condensate particulates generated during the metal printing process, during the filtering operation of the processable medium.

Each filter module 102a, 102b generally includes a filter housing 104 that extends between an upper hood 106 and a lower base 110. The lower base 110 of each filter module 102a, 102b may be mounted to a shared enclosure 108 which houses and protects additional components of the filter device 100. The shared enclosure 108 may include height-adjustable wheels which permit movement of the filter device 100 during, for example, installation of the filter device 100 with an associated additive manufacturing apparatus.

The filter device 100 includes a filter device pipe 112 includes an inlet 113 that is adapted to fluidly connect to an outlet 115 of an associated additive manufacturing apparatus 10 through which the processable medium is discharged. The filter device pipe 112 eventually splits the flow of the processable medium between a respective filter housing inlet 114 of each filter module 102a, 102b. In this regard, the filter device inlet 112 is fluidly connected to the filter housing inlet 114 of each filter module 102a, 102b. In some embodiments, as illustrated in FIG. 1, each filter housing inlet 114 is fluidly connected with a single filter device inlet 112 that fluidly connects to a processable medium outlet of an associated additive manufacturing device. In such embodiments, a processable medium valve 111 may be fluidly connected between the filter device inlet 112 and the filter housing inlets 114 which selectively permits flow of the processable medium to one or both of the filter housing inlets 114. As shown in FIG. 1, the processable medium valve 111 is shown closing off flow to both of the filter housing inlets 114. Alternatively, the processable medium valve 111 between the filter device inlet 112 and the filter housing inlets 114 may be closed with respect to the filter housing inlet 114 of the first filter module 102a but open with respect to the filter housing inlet 114 of the second filter module 102b when the first filter module 102a is undergoing a filter cleaning process, as described in further detail below. However, it is contemplated that each filter housing inlet 114 may have individual fluid connections to the processable medium outlet of the associated additive manufacturing device.

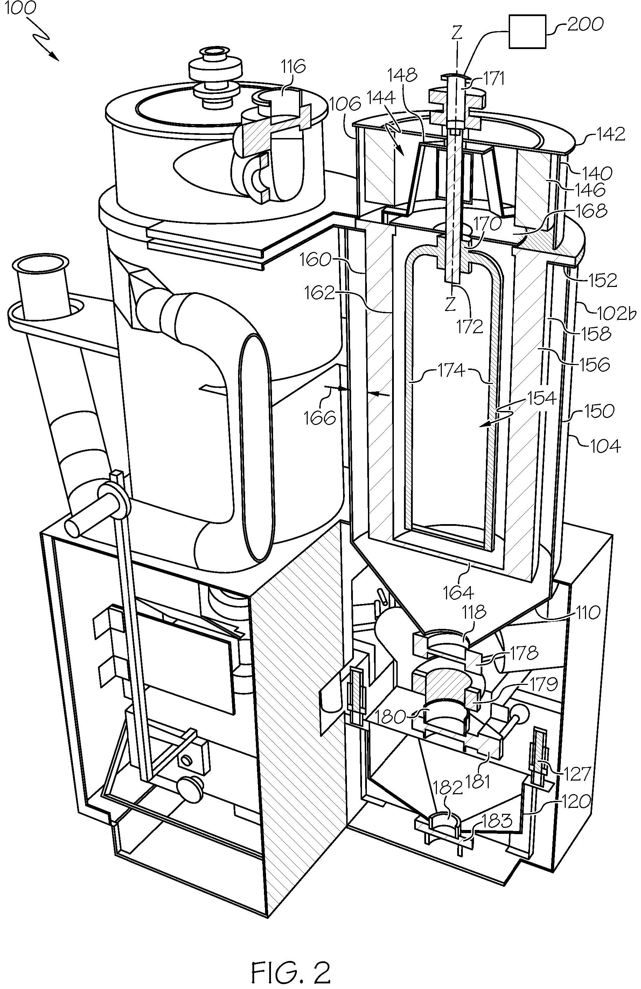

Each filter housing inlet 114 is formed in a sidewall 150 (see FIG. 2) of the filter housing 104 and is generally positioned beneath the upper hood 106 and above the lower base 110. A filter device inert gas outlet 116 interconnected between the upper hood 106 of each filter module 102a, 102b is positioned above the filter housing inlets 114 and is adapted to discharge the inert gas filtered from the processable medium. In some embodiments, as illustrated in FIG. 1, the filter device inert gas outlet 116 may be shared between each filter module 102a, 102b. However, it is contemplated that each filter module 102a, 102b may include its own filter device inert gas outlet. A filter device particulate outlet 118 is formed at the bottom of the lower base 110 of the filter housing 104 and is adapted to discharge the particulates that have separated from the processable medium and collected in the lower base 110.

The filter device 100, and more particularly, each filter module 102a, 102b further includes a collection container 120 adapted to receive the particles discharged from the filter device particulate outlet 118 of the filter housing 104. The collection container 120 is generally sized to fit within the enclosure 108 and fit below the filter housing 104. The collection container 120 is fluidly connected to the filter housing 104 and a locking mechanism 122 is provided to help maintain the fluid connection between the collection container 120 and the filter housing 104 during operation of the filter device 100.

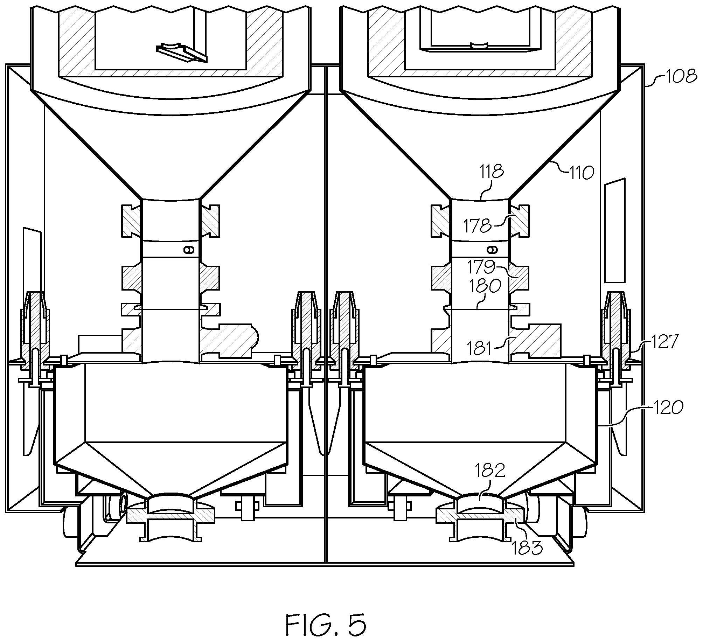

The locking mechanism 122 may include multiple elements disposed on different components of the filter device 100. In embodiments, the locking mechanism 122 may include a flap door 124 mounted to the enclosure 108 and adapted to trigger a safety switch that closes a valve between the collection container 120 and the filter housing 104 upon removal of the collection container 120 from the enclosure 108. In other embodiments, the locking mechanism 122 may include a rotatable lever 126 mounted on both sides of the collection container 120 which extends rearward behind the collection container 120 for user access. When rotated upward, the rotatable lever 126 engages one or more toggle clamps 127 (see FIGS. 2 and 5) to lock the collection container 120 in place with respect to the filter housing 104 and within the enclosure 108. In other embodiments, as shown in FIG. 1, the locking mechanism 122 may include both the flap door 124 and the rotatable lever 126. In embodiments, the collection container 120 is provided with wheels and a handle for easy maneuverability to and from the filter device 100.

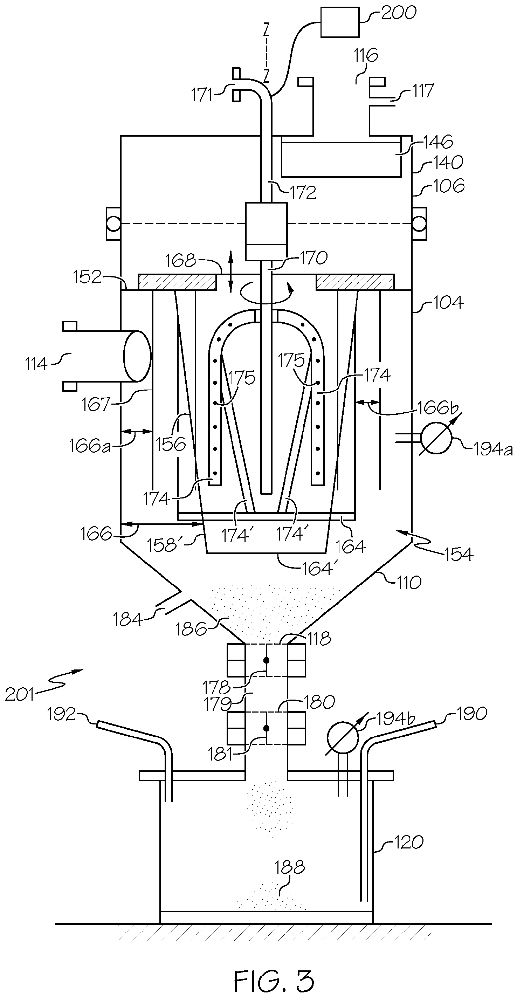

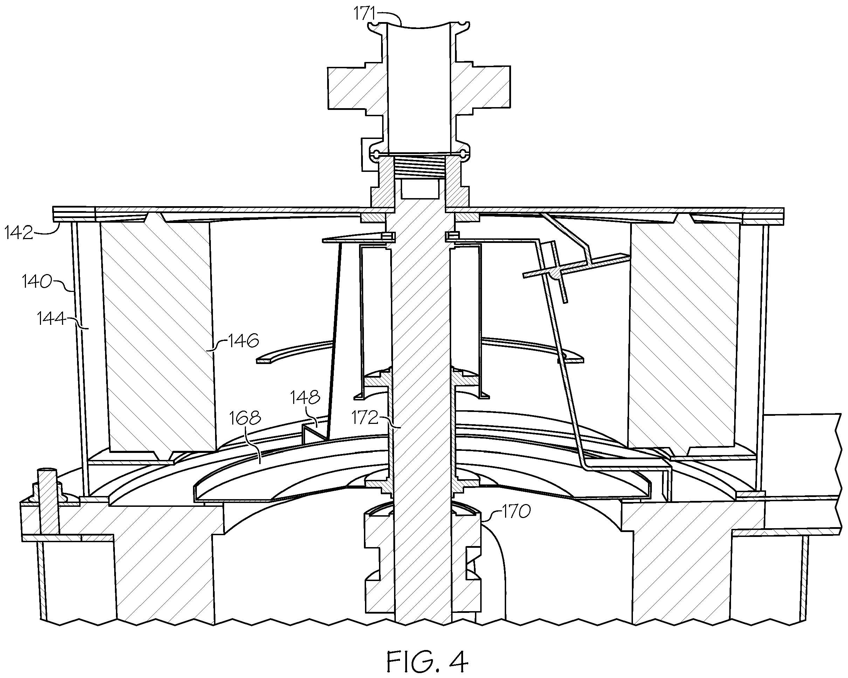

Referring now to FIGS. 2 and 3, the filter device 100 is illustrated with filter module 102b in cross-section to show additional detail and the internal components of filter module 102b. FIG. 3 illustrates a simplified cross section of filter module 102b. It should be understood that the filter module 102a includes the same internal components as the filter module 102b. The upper hood 106 is generally mounted on top of the filter housing 104 and includes a hood sidewall 140 that is generally cylindrical in shape. The filter device inert gas outlet 116 is fluidly connected with the hood sidewall 140 and includes a filter housing passivation gas outlet 117. The filter housing passivation gas outlet 117 is provided to discharge excess passivation gas which, as discussed in further detail below, is injected into the filter housing 104 via a filter housing passivation gas inlet 184. A hood ceiling 142 seals off the top of the hood sidewall 140 and a hood interior 144 is defined between the top of the filter housing 104 and the hood ceiling 142. The hood interior 144 houses a secondary or hood filter 146 suspended from the hood ceiling 142. The secondary or hood filter 146 may have an annular shape to extend around an inner peripheral surface of the hood sidewall 140. In this regard, the hood sidewall 140 and secondary or hood filter 146 are generally concentrically aligned about a center axis Z-Z. A bracket 148 is also housed within the hood interior 144 which, as described in further detail below, prevents excess lifting of a dust lid 168 and supports a rotatable nozzle (e.g., rotatable nozzle 170). The internal components of the upper hood 106 can be seen in further detail with reference to FIG. 4.

Referring still to FIGS. 2 and 3, the filter housing 104 includes a filter housing sidewall 150 that is generally cylindrical in shape. The filter housing sidewall 150 extends between a filter housing ceiling 152 and the lower base 110 of the filter housing 104 to define a filter housing interior 154. The lower base 110 of the filter housing 104 is frustoconical or funnel shaped to help assist the downward flow of particulates 186 toward the filter device particulate outlet 118. The filter housing interior 154 houses a primary filter 156 mounted to or otherwise suspended from the filter housing ceiling 152. The primary filter 156 is defined by an annular filter wall 158 that extends around an inner peripheral surface of the filter housing sidewall 150. The annular filter wall 158 generally extends vertically between the filter housing ceiling 152 and the lower base 110 of the filter housing 104.

In some embodiments, the annular filter wall 158 runs substantially parallel to the filter housing sidewall 150. In other embodiments, the primary filter 156 has a tapered filter wall 158' (FIG. 3). The annular filter wall 158 includes an exterior surface 160 and an interior surface 162. The annual filter wall 158 further includes an end face 164 (or end face 164' in embodiments with the tapered filter wall 158') closes off the inner diameter of the annular filter wall 158 at a lower end thereof and a dust lid 168 closes off the inner diameter of the annular filter wall 158 at an upper end thereof. While end face 164 is generally stationary, the dust lid 168 can move vertically upward and downward along a shaft 172 of the rotatable nozzle (e.g., rotatable nozzle 170). The bracket 148 housed within the hood interior 144 prevents excessive lifting of the dust lid 168 such that particulates, but not gas, are prevented from entering the hood 106 and exiting the filter device inert gas outlet 116.

Moreover, the primary filter 156 is sized such that an annular gap 166 is formed between the exterior surface 160 of the annular filter wall 158 and the inner peripheral surface of the filter housing sidewall 150. An annular separation sheet 167 (FIG. 3) may be mounted to or otherwise suspended from the filter housing ceiling 152 and positioned in the annular gap 166 to prevent particulates from directly impinging on the exterior surface 160 of the annular filter wall 158 and potentially causing damage thereto as the processable medium enters the filter housing 104 from the filter housing inlet 114. Moreover, as shown in FIG. 3, the annular separation sheet 167 divides the annular gap 166 into a first annular gap 166a defined between the inner peripheral surface of the filter housing sidewall 150 and the outer peripheral surface of the annular separation sheet 167 and a second annular gap 166b defined between the inner peripheral surface of the annular separation sheet 167 and the exterior surface 160 of the annular filter wall 158.

Each filter module 102a, 102b is further provided with a rotatable nozzle 170 that is utilized during a purging or cleaning process of the filter module 102a, 102b. Specifically, as described in further detail below, the rotatable nozzle 170 rotates to dislodge particulates that have accumulated on the exterior surface 160 of the annular filter wall 158. As shown in FIGS. 2 and 3, the rotatable nozzle 170 is generally mounted to the filter housing 104 such that at least a portion thereof is positioned within the annular filter wall 158. The rotatable nozzle 170 includes a nozzle inlet 171 through which a cleaning gas is introduced. The cleaning gas introduced into the nozzle inlet 171 is preferably the same as the inert gas which is introduced to the build chamber of the associated additive manufacturing apparatus. A nozzle shaft 172 of the rotatable nozzle 170 extends through the hood ceiling 142, into the hood interior 144, through the dust lid 168, and into the filter housing interior 154. One or more nozzle arms 174 protrude downward from the nozzle shaft 172 and extend substantially parallel to and within the annular filter wall 158. In this regard, the filter housing sidewall 150, annular filter wall 158, annular separation sheet 167, and one or more nozzle arms 174 are generally concentrically aligned about center axis Z-Z. In embodiments where the tapered filter wall 158' is used, one or more nozzle arms 174' taper inward toward the center axis Z-Z. A plurality of nozzle arm outlets 175 (FIG. 3) are evenly distributed along the length of the one or more nozzle arms 174 such that the cleaning gas introduced via the nozzle inlet 171 can be evenly dispersed during the purging or cleaning process of the filter module. Accordingly, rotation of the rotatable nozzle 170 allows the nozzle arms 174 to be rotated a complete 360 degrees to eject the cleaning gas in all radial directions toward the primary filter 156. More specifically, rotating the rotatable nozzle 170 ensures that all sides and areas of the primary filter 156 are sprayed with the cleaning gas to ensure all particulates that have accumulated on the exterior surface 160 of the annular filter wall 158 are dislodged.

As shown in FIG. 3, as mentioned above, the collection container 120 is fluidly connected to the filter housing 104. In this regard, a valve system fluidly interconnects the filter device particulate outlet 118 of the filter housing 104 to a container particulate inlet 180 of the collection container 120. The valve system is most clearly illustrated with reference to FIGS. 3 and 5. More particularly, the valve system includes a filter device particulate extraction valve 178 that controls the flow of particulates 186 from the filter device particulate outlet 118 into a transition area or sluice 179. A container particulate inlet 180 is fluidly connected to a bottom of the sluice 179 and a container particulate inlet valve 181 controls the flow of particulates 186 from the sluice 179, past the container particulate inlet 180, and into the collection container 120. During the filtering operation of the filter device 100, the filter device particulate extraction valve 178 and the container particulate inlet valve 181 are open such that particulates 186 can fall down into the collection container 120.

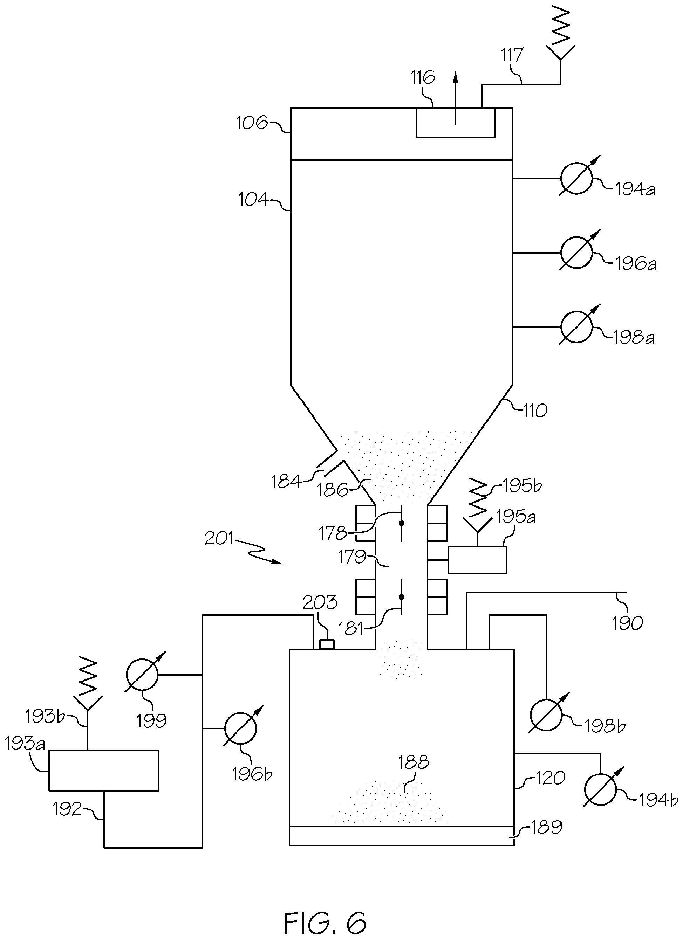

Referring now to FIG. 3, he filtering operation will now be described with reference to one of the filter modules (e.g., 102b), however it should be understood that the filtering operation is the same for both filter modules 102a, 102b. During normal operation (filtering operation) of the filter device 100, the processable medium is introduced into at least one of the filter modules 102a, 102b via the filter housing inlet 114. The filter housing inlet 114 may be formed in the filter housing sidewall 150 so that an at least approximately tangential inflow of the processable medium into the filter housing interior 154 is provided. In this regard, a spiral or helical flow of the processable medium is induced by the tangential inflow to achieve a vortex-like separation of particulates 186 and metal powder. Moreover, in embodiments where the primary filter 156 has a tapered filter wall 158', an enhanced vortex-like separation may be achieved due to the shape of the tapered filter wall 158'. As the processable medium swirls around the filter housing 104, the particulates 186 may impinge against the annular separation sheet 167 and the inner peripheral surface of the filter housing sidewall 150 and fall down to the lower base 110 of the filter housing 104. The frustoconical or funnel shaped lower base 110 assists with the downward flow of particulates 186 toward the filter device particulate outlet 118, through the sluice 179 and container particulate inlet 180, and into the collection container 120 where collected particulates 188 begin to accumulate. In this regard, during the filtering operation, the filter device particulate extraction valve 178 and the container particulate inlet valve 181 remain open so that the particulates 186 can be collected in the collection container 120 as a result of gravity. As shown in FIG. 6, the sluice 179 includes a filter 195a and an associated spring-loaded pressure control valve (e.g., check valve) 195b for filtering and regulating the discharge of excess passivation gas, respectively, when the filter device particulate extraction valve 178 and/or the container particulate inlet valve 181 are opened. The collection container 120 may also be formed to have a frustoconical or funnel shaped bottom to assist the downward flow of collected particulates 188 toward a container particulate outlet 182 and an associated container particulate outlet valve 183, as shown in FIG. 5.

Referring again to FIGS. 2 and 3, as the processable medium swirls around the filter housing 104, the metal powder in the processable medium may also impinge against the annular separation sheet 167 and the inner peripheral surface of the filter housing sidewall 150 and falls down to the lower base 110 of the filter housing 104 and into a separate container or the collection container 120 which collects particulates 188. In this regard, during the filtering operation, the filter device particulate extraction valve 178 and the container particulate inlet valve 181 remain open so that the metal powder can be collected in the separate container or collection container 120 as a result of gravity. The separated metal powder which has been collected can subsequently be reused or recycled in the metal printing process.

Referring still to FIGS. 2 and 3, as the particulates 186 are separated from the processable medium, the inert gas is filtered from the processable medium by the primary filter 156 and subsequently the hood filter 146. More particularly, as a result of the suction flow arising between the filter housing inlet 114 and the filter device inert gas outlet 116 during the filtering operation, the inert gas is sucked from below and into the second annular gap 166b defined between the inner peripheral surface of the annular separation sheet 167 and the exterior surface 160 of the annular filter wall 158. Once sucked into the second annular gap 166b, the inert gas penetrates the annular filter wall 158 from the exterior surface 160 to the interior surface 162 so that the inert gas reaches the filter housing interior 154 in a filtered condition substantially free from contaminants. From the filter housing interior 154, the inert gas is sucked upward past the dust lid 168 and into the hood interior 144 where the inert gas is filtered again through the hood filter 146 before exiting the filter device inert gas outlet 116. The inert gas can then be returned to the build chamber of the associated additive manufacturing device.

Referring still to FIGS. 2 and 3, during the course of the filtering operation, contaminants such as particulates 186 can settle on or adhere to the annular filter wall 158 of the primary filter 156. Over time, more and more particulates accumulate on the annular filter wall 158. These accumulated particulates obstruct the flow of the inert gas through the annular filter wall 158 and can lead to a disadvantageous pressure drop across the filter housing 104. As such, it becomes necessary to periodically clean the primary filter 156 to remove the accumulated particulates. In accordance with the embodiments described herein, the rotatable nozzle 170 is utilized to perform the cleaning of the primary filter 156. When it comes time to clean the primary filter 156 of one of the filter modules (e.g., 102b), which may be determined by a measurement of the pressure drop across the filter housing 104, the flow of the processable medium is cut off to the filter module needing cleaning. In this regard, a shut-off valve can be used at the filter housing inlet 114, or alternatively at the filter device inlet 112, to cut off flow of the processable medium to the filter module needing cleaning (e.g., 102b). However, the flow of the processable medium can continue in the other filter module (e.g., 102a) so that the printing process in the build chamber of the associated additive manufacturing device does not need to be suspended.

Referring still to FIGS. 2 and 3, once the flow of the processable medium is cut off to the filter module needing cleaning, the cleaning or purging process by the rotatable nozzle 170 can be performed. In this regard, the cleaning gas is introduced into the rotatable nozzle 170 via the nozzle inlet 171, travels through the nozzle shaft 172 to the one or more nozzle arms 174, and exits the plurality of nozzle arm outlets 175 to generate a cleaning gas pressure surge in the filter housing interior 154. The even distribution of the plurality of nozzle arm outlets 175 along the one or more nozzle arms 174, along with the rotational motion of the rotatable nozzle 170 about the center axis Z-Z, ensures an even dispersal of the cleaning gas pressure surge across the annular filter wall 158. Rotation of the rotatable nozzle 170 may be achieved, for example, by a motor 200 that turns the nozzle shaft 172. As shown, the motor 200 is coupled to the nozzle shaft 172 of the second filter module 102b. However, another motor 200 may be similarly coupled to the nozzle shaft 172 of the first filter module 102a. The cleaning gas pressure surge penetrates the annular filter wall 158 contrary to the normal filter direction in which the inert gas typically flows. That is, filtration of the inert gas normally occurs from the exterior surface 160 to the interior surface 162 of the annular filter wall 158, but the cleaning gas pressure surge penetrates from the interior surface 162 to the exterior surface 160 of the annular filter wall 158. As a result, the cleaning gas pressure surge acts to dislodge the particulates that have accumulated on the exterior surface 160 of the annular filter wall 158, such that the dislodged accumulated particulates can fall by gravity to the lower base 110 of the filter housing 104 and into the collection container 120.

Referring to FIGS. 3 and 6, the particulate matter 186, 188 separated from the processable medium during the filtering operation is highly "energized" and can lead to self-ignition if exposed to oxygen. In order to ensure the safe handling of the reactive particulate matter 186, 188, the filter device 100 is adapted to passivate the particulate material 186, 188 at various stages during the filtering operation and control oxygen within safe operating levels. In this regard, a passivation system 201 is provided which generally includes a filter housing passivation gas inlet 184, a filter housing passivation gas outlet 117, a container passivation gas inlet 190, and a container passivation gas outlet 192. The passivation system 201 is fluidly connected to at least one of the filter housing 104 and collection container 120 such that passivation of the particulates 186 separated from the processable medium occurs within the filter housing 104 and passivation of the collected particulates 188 occurs within the collection container 120. For passivation within the filter housing 104, the passivation system 201 includes a filter housing passivation gas inlet 184 provided in the lower base 110 for injecting a passivation gas into the filter housing 104 and includes a filter housing passivation gas outlet 117 for discharging excess passivation gas. For passivation within the collection container 120, the passivation system 201 includes a container passivation gas inlet 190 provided for injecting the passivation gas into the collection container 120 and includes a container passivation gas outlet 192 for discharging excess passivation gas. The container passivation gas outlet 192 includes a filter 193a and an associated spring-loaded pressure control valve (e.g., check valve) 193b for filtering and regulating the discharge of the excess passivation gas, respectively.

Referring still to FIGS. 3 and 6, the passivation gas injected at inlets 184 and 190 is in the form of a mixture of air/compressed air and inert gas (e.g., nitrogen or argon). In order to monitor the respective oxygen levels, a first oxygen controller or gauge 194a is fluidly connected to the filter housing 104 and a second oxygen controller or gauge 194b is fluidly connected to the collection container 120. In some embodiments, safer and faster passivation of the particulates 186 separated from the processable medium and collected within the filter housing 104 may be achieved by wetting the passivation gas injected at the filter housing passivation gas inlet 184 with a liquid such as water. By wetting the passivation gas, the water creates a chemical reaction with the reactive particulates (e.g., aluminum) and generates hydrogen to completely passivate the reactive particulates. By controlling the amount of water introduced, the hydrogen can be maintained at safe levels. In addition, the water creates a layer of moisture on other reactive materials like soot which provides additional passivation.

Moreover, in a similar manner, safer and faster passivation of the collected particulates 188 in the collection container 120 may be achieved by wetting the passivation gas injected at container passivation gas inlet 190 with a liquid such as water. Wetting of the passivation gas may be performed when the collection container 120 is full or has otherwise reached a fill level threshold such that emptying of the collection container 120 is required. Moreover, in some embodiments, the bottom of the collection container 120 may include a heater 189 (FIG. 6) adapted to heat the collected particulates 188 and thereby accelerate the passivation process.

In order to ensure adequate passivation of the separated particulates 186 and the collected particulates 188, various other parameters in addition to oxygen level may be monitored. With reference to FIG. 6, pressure may be monitored in the filter housing 104 via pressure controller or gauge 196a fluidly connected to the filter housing 104. Pressure may also be monitored in the container passivation gas outlet 192 via pressure controller or gauge 196b. In addition to pressure, dew point may also be monitored via dew point controller or gauge 199 fluidly connected to the container passivation gas outlet 192. The dew point is important to monitor as the addition of water will start the chemical reaction to passivate in a controlled manner as described above. Temperature may be monitored in the filter housing 104 via temperature controller or gauge 198a fluidly connected to the filter housing 104. Temperature may also be monitored in the collection container 120 via temperature controller or gauge 198b fluidly connected to the collection container 120. Temperature is important to monitor as it impacts at least two passivation characteristics. The first is that temperature impacts reactivity (e.g., the speed of the chemical reaction). The second is that an increased temperature will increase the level of oxidation.

As the filtering operation continues, the collection container 120 continues to fill with collected particulates 188 that are passivated within the collection container 120 as described above. To prevent overfill, the collection container 120 may be provided with a fill level sensor 203 for measuring the amount (e.g., volume) of collected particulate 188 stored within the collection container 120. The fill level sensor 203 is adapted to determine when a threshold fill level has been reached within the collection container 120, and once the threshold fill level is reached, the collection container 120 can be removed from the filter housing 104 and the collected particulates 188 can be emptied. More particularly, the collected particulates 188 can be discharged from the container particulate outlet 182 upon opening of the container particulate outlet valve 183 and appropriately disposed of. The collection container 120 can then be returned to its fluid connection with the filter housing 104 such that collection of particulates 186 can resume in the filter module 102b. That is, the flow of the processable medium to the filter housing 104 of the filter module 102b can resume.

Although the filter modules 102a, 102b are described herein as including both the rotatable nozzle 170 and the passivation system 201, it should be appreciated that each filter module 102a, 102b need not include components for both cleaning the primary filter 156 and passivating the particulates. For example, the first filter module 102a may include the rotatable nozzle 170 and the second filter module 102b may include the passivation system 201. Alternatively, the first filter module 102a may include both the rotatable nozzle 170 and the passivation system 201, while the second filter module 102b only includes one of the rotatable nozzle 170 and the passivation system 201.

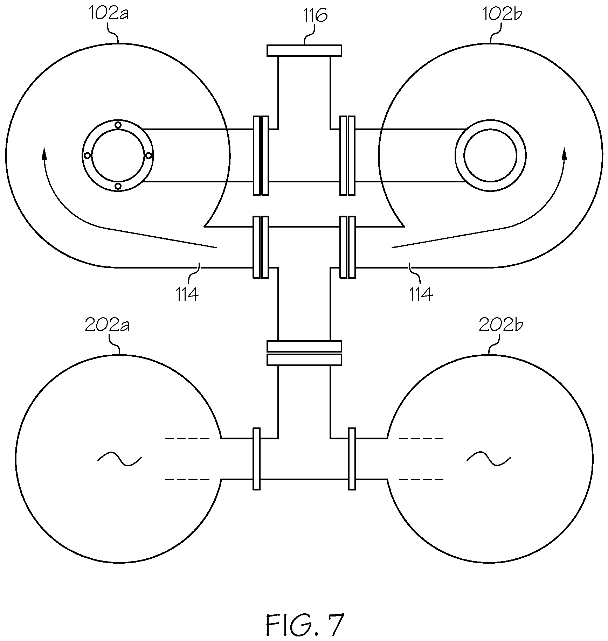

Referring now to FIG. 7, the filter modules 102a, 102b of the filter device 100 are illustrated from a top view, with each filter housing inlet 114 and the filter device inert gas outlet 116 being fluidly connected. Additional filter modules 202a, 202b are also illustrated as being fluidly connected with the filter modules 102a, 102b. In some embodiments, the additional filter modules 202a, 202b have substantially the same construction as filter modules 102a, 102b described above. However, it is also contemplated that the additional filter modules have a different construction than filter modules 102a, 102b. In any event, FIG. 7 illustrates the scalability of the filter device 100 of the present disclosure. That is, depending on factors such as size of the associated additive manufacturing apparatus and/or the specific filtration requirements thereof, the filter device 100 can easily be scaled up to include any number of filter modules fluidly connected to one another.

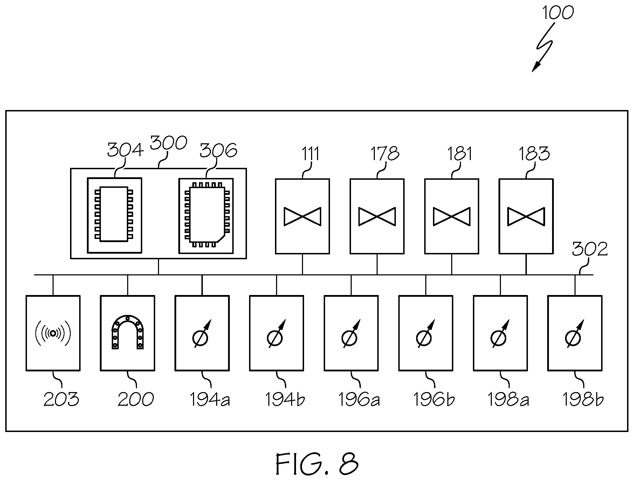

Referring now to FIG. 8, components of the filter device 100 are schematically depicted. The filter device 100 includes an electronic control unit 300, a communication path 302, the sensor 203, and the various valves described herein such as, for example, the processable medium valve 111, the container particulate inlet valve 181, and the container particulate outlet valve 183, as well as the oxygen, pressure, and temperature controllers or gauges 194a, 194b, 196a, 196b, 198a, 198b.

As noted above, the filter device 100 includes the communication path 302. The communication path 302 may be formed from any medium that is capable of transmitting a signal such as, for example, conductive wires, conductive traces, optical waveguides, or the like. Moreover, the communication path 302 may be formed from a combination of mediums capable of transmitting signals. In one embodiment, the communication path 302 includes a combination of conductive traces, conductive wires, connectors, and buses that cooperate to permit the transmission of electrical data signals to components such as processors, memories, sensors, input devices, output devices, and communication devices. Additionally, it is noted that the term "signal" means a waveform (e.g., electrical, optical, magnetic, mechanical or electromagnetic), such as DC, AC, sinusoidal-wave, triangular-wave, square-wave, vibration, and the like, capable of traveling through a medium. The communication path 302 communicatively couples the various components of the filter device 100. As used herein, the term "communicatively coupled" means that coupled components are capable of exchanging data signals with one another such as, for example, electrical signals via conductive medium, electromagnetic signals via air, optical signals via optical waveguides, and the like.

As noted above, the filter device 100 includes the electronic control unit 300 including one or more processors 304 and one or more memory modules 306. Each of the one or more processors 304 may be any device capable of executing machine readable instructions. Accordingly, each of the one or more processors 304 may be an integrated circuit, a microchip, a computer, or any other computing device. The one or more processors 304 are communicatively coupled to the other components of the filter device 100 by the communication path 302. Accordingly, the communication path 302 may communicatively couple any number of processors with one another, and allow the modules coupled to the communication path 302 to operate in a distributed computing environment. Specifically, each of the modules may operate as a node that may send and/or receive data.

Each of the one or more memory modules 306 of the filter device 100 is coupled to the communication path 302 and communicatively coupled to the one or more processors 304. The one or more memory modules 306 may include RAM, ROM, flash memories, hard drives, or any device capable of storing machine readable instructions such that the machine readable instructions may be accessed and executed by the one or more processors 302. The machine readable instructions may include logic or algorithm(s) written in any programming language of any generation (e.g., 1GL, 2GL, 3GL, 4GL, or 5GL) such as, for example, machine language that may be directly executed by the processor, or assembly language, object-oriented programming (OOP), scripting languages, microcode, etc., that may be compiled or assembled into machine readable instructions and stored on the one or more memory modules 306. In some embodiments, the machine readable instructions may be written in a hardware description language (HDL), such as logic implemented via either a field-programmable gate array (FPGA) configuration or an application-specific integrated circuit (ASIC), or their equivalents. Accordingly, the methods described herein may be implemented in any conventional computer programming language, as pre-programmed hardware elements, or as a combination of hardware and software components.

The electronic control unit 300 is communicatively coupled to the other components of the filter device 100. As such, the electronic control unit 300 is configured to receive signals from various components of the filter device 100 and, in response, appropriately control operation of the filter device 100 via the other components. Various operations of the above components during operation are described in more detail herein.

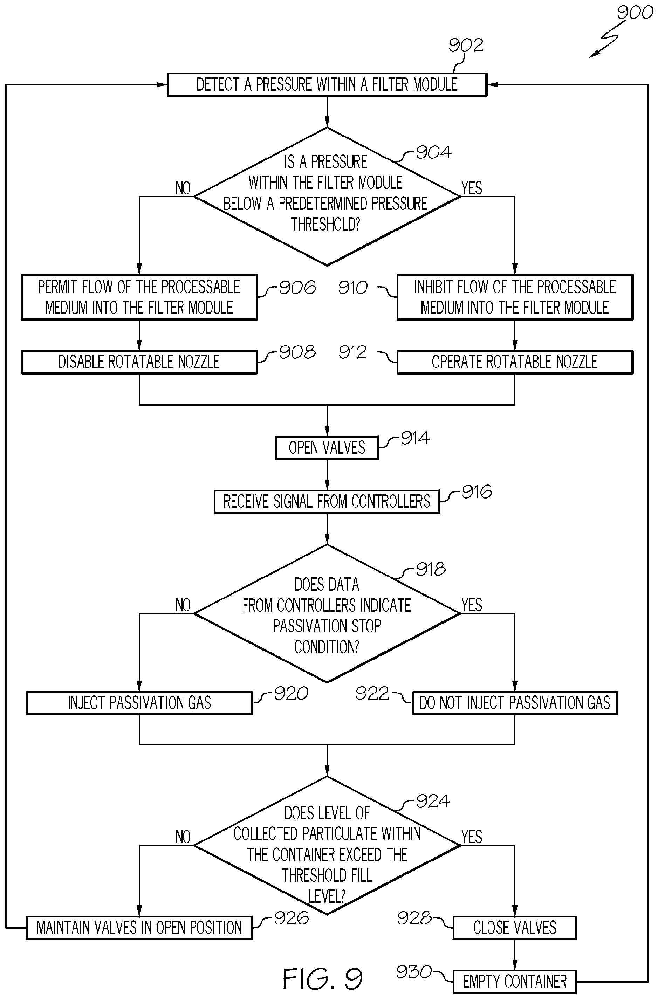

Referring now to FIG. 9, and with reference to FIGS. 1-8, a flow diagram is illustrated depicting a method 900 of operation of the filter device 100. At step 902, a pressure within the filter modules 102a, 102b is detected by the pressure controller 196a configured to detect a pressure within the filter housing 104. At step 904, the pressure detected by the pressure controller 196a is transmitted to the electronic control unit 300 to determine whether the pressure within each of the filter modules 102a, 102b, is below a predetermined pressure threshold. When the pressure within each of the filter modules 102a, 102b, is below a predetermined pressure threshold, this may be indicative of a pressure drop within the filter modules 102a, 102b such that the primary filter 156 needs to be cleaned.

If it is determined at step 904 that the pressure within either one of the filter modules 102a, 102b is not below the predetermined pressure threshold, the method 900 proceeds to step 906 at which the processable medium is permitted to flow into the particular filter module 102a, 102b. Specifically, the electronic control unit 300 operates the processable medium valve 111 into an open position to permit the processable medium to flow into the particular filter module 102a, 102b from the additive manufacturing apparatus 10. At step 908, since the pressure drop was not detected and it is determined that the primary filter 156 does not require cleaning, the rotatable nozzle 170 is disabled.

Alternatively, if it is determined at step 904 that that the pressure within either one of the filter modules 102a, 102b is below the predetermined pressure threshold, the method 900 proceeds to step 910 at which the processable medium is inhibited from flowing into the particular filter module 102a, 102b. Specifically, the electronic control unit 300 operates the processable medium valve 111 into a closed position to inhibit the processable medium from flowing into the particular filter module 102a, 102b from the additive manufacturing apparatus 10. At step 912, since the pressure drop was detected and it is determined that the primary filter 156 does in fact require cleaning, the rotatable nozzle 170 is enabled by operating the motor 200. As described herein, during operation of the rotatable nozzle 170, cleaning gas is introduced into the rotatable nozzle 170 and directed at the primary filter 156 through the outlets 175 to dislodge any accumulated particulates.

In any event, after step 908 or step 912, the electronic control valve 300 operates the filter device particulate extraction valve 178 and the container particulate inlet valve 181 into the open position at step 914 such that particulates 186 can fall down into the collection container 120. Additionally, at step 916, throughout operation, additional data is collected by the oxygen, pressure, and temperature controllers or gauges 194a, 194b, 196a, 196b, 198a, 198b and transmitted to the electronic control unit 300 to monitor conditions within the filter modules 102a, 102b, as described herein. Additionally, the data collected by the oxygen, pressure, and temperature controllers or gauges 194a, 194b, 196a, 196b, 198a, 198b is utilized by the electronic control unit 300 to determine whether a passivation stop condition is satisfied.

Accordingly, at step 918, if the electronic control unit 300 determines that a passivation stop condition is not satisfied, based on the data collected by the oxygen, pressure, and temperature controllers or gauges 194a, 194b, 196a, 196b, 198a, 198b, the passivation gas is injected into the filter modules 102a, 102b via the filter housing passivation gas inlet 184 and the container passivation gas inlet 190. As described herein, excess passivation gas exits the filter modules 102a, 102b via the filter housing passivation gas outlet 117 and the container passivation gas outlet 192.

Alternatively, if the electronic control unit 300 determines at step 918 that a passivation stop condition is satisfied, based on the data collected by the oxygen, pressure, and temperature controllers or gauges 194a, 194b, 196a, 196b, 198a, 198b, the passivation gas is ceased from being injected into the filter modules 102a, 102b via the filter housing passivation gas inlet 184 and the container passivation gas inlet 190. This may be done through closing a valve at the filter housing passivation gas inlet 184 and the container passivation gas inlet 190 or merely deactivating a passivation gas supply. This allows the passivation gas within the filter modules 102a, 102b to exit through the filter housing passivation gas outlet 117 and the container passivation gas outlet 192. Once the passivation stop condition is no longer satisfied, the passivation gas may continue to be injected into the filter modules 102, 102a.

During operation, data is collected by the fill level sensor 203 detect a level of particulates 188 within the collection container 120. Thereafter, at step 924, the data collected by the fill level sensor 203 is transmitted to the electronic control unit 300 to determine whether the level of particulates 188 within the collection container 120 exceeds a threshold fill level. If it is determined at step 924 that the level of particulates does not exceed the threshold fill level, the filter device particulate extraction valve 178 and the container particulate inlet valve 181 are maintained in the open position at step 926. Alternatively, if it is determined at step 924 that the level of particulates does exceed the threshold fill level, the filter device particulate extraction valve 178 and the container particulate inlet valve 181 are positioned into the closed position at step 928. Thereafter, the collection container 120 is removed from the filter module 102a, 102b, emptied at step 930, and returned. In any event, after step 926 or step 930, the method 900 returns to step 902 to continuously detect a pressure within the filter modules 102a, 102b via the pressure controller 196a and the process repeats.

From the above, it is to be appreciated that defined herein are filter devices for additive manufacturing apparatuses and methods of cleaning or filtering process gasses generated during a build process of the additive manufacturing apparatus. The filter devices of the present disclosure provide a solution for effective cleaning of the specific condensate generated during the additive build process, while also providing for the safe passivation of reactive condensate and soot using inert gas and air. As described herein, the filter devices provide for continuous filter cleaning and passivation without interruption by permitting a plurality of filter modules to be used in combination. For example, one filter module may be used to clean a filter while the other filter module may be used to passivate the processable medium. In other instances, both filter modules may be used to passivate the processable medium rather than cleaning the filter within each filter module.

Further aspects of the embodiments described herein are provided by the subject matter of the following clauses:

A filter device comprising: a filter device inlet that receives a processable medium from an additive manufacturing apparatus; and a filter module that separates particulates and inert gas from the processable medium, the filter module comprising: a filter housing with a filter housing inlet that is fluidly connected to the filter device inlet to receive the processable medium; a primary filter mounted within an interior of the filter housing; a rotatable nozzle mounted to the filter housing and at least partially positioned within the primary filter; a collection container fluidly connected to the filter housing; and a filter device inert gas outlet that discharges the inert gas.

The filter device of any preceding clause, wherein the rotatable nozzle comprises: a nozzle arm extending within the primary filter; and a nozzle inlet that provides a cleaning gas.

The filter device of any preceding clause, wherein the rotatable nozzle comprises a pair of nozzle arms, a plurality of nozzle arm outlets are distributed over the pair of nozzle arms to disperse the cleaning gas.

The filter device of any preceding clause, wherein the primary filter and the rotatable nozzle are concentrically aligned about a center axis.

The filter device of any preceding clause, further comprising: a pressure controller; and a motor configured to rotate the rotatable nozzle; and an electronic control unit communicatively coupled to the pressure controller and the pressure controller, the electronic control unit configured to: receive a signal from the pressure controller indicating a pressure within the filter housing; and in response to determining that the pressure within the filter housing is below a predetermined pressure threshold, send a signal to the motor to rotate the rotatable nozzle.

The filter device of any preceding clause, further comprising a locking mechanism to maintain a fluid connection between the filter housing and the collection container.

The filter device of any preceding clause, wherein the primary filter and the rotatable nozzle are concentrically aligned about a center axis.

The filter device of any preceding clause, further comprising a passivation system fluidly connected to at least one of the filter housing and the collection container.

The filter device of any preceding clause, wherein the passivation system comprises: a filter housing passivation gas inlet provided in a lower base of the filter housing for injecting a passivation gas into the filter housing; and a filter housing passivation gas outlet for discharging excess passivation gas within the filter housing.

The filter device of any preceding clause, wherein the passivation system comprises: a container passivation gas inlet for injecting the passivation gas into the collection container; and a container passivation gas outlet for discharging excess passivation gas within the collection container.

The filter device of any preceding clause, wherein the passivation system is fluidly connected to each of the filter housing and the collection container, passivation of the particulates separated from the processable medium occurs within the filter housing and passivation of collected particulates occurs within the collection container.

A filter device comprising: a filter device inlet that receives a processable medium from an additive manufacturing apparatus; and a filter module that separates particulates and inert gas from the processable medium, the filter module comprising: a filter housing with a filter housing inlet that is fluidly connected to the filter device inlet to receive the processable medium; a primary filter mounted within an interior of the filter housing; a collection container fluidly connected to the filter housing; a passivation system fluidly connected to at least one of the filter housing and the collection container; and a filter device inert gas outlet that discharges the inert gas.

The filter device of any preceding clause, wherein the passivation system comprises: a filter housing passivation gas inlet provided in a lower base of the filter housing for injecting a passivation gas into the filter housing; and a filter housing passivation gas outlet for discharging excess passivation gas within the filter housing.

The filter device of any preceding clause, wherein the passivation system comprises: a container passivation gas inlet for injecting the passivation gas into the collection container; and a container passivation gas outlet for discharging excess passivation gas within the collection container.

The filter device of any preceding clause, wherein the passivation system is fluidly connected to each of the filter housing and the collection container, passivation of the particulates separated from the processable medium occurs within the filter housing and passivation of collected particulates occurs within the collection container.

The filter device of any preceding clause, further comprising: an oxygen controller fluidly connected to the filter housing; a pressure controller fluidly connected to the filter housing; and a temperature controller fluidly connected to the filter housing.

The filter device of any preceding clause, further comprising: an oxygen controller fluidly connected to the collection container; a pressure controller fluidly connected to the collection container; and a temperature controller fluidly connected to the collection container.

A filter device comprising: a filter device inlet that receives a processable medium from an additive manufacturing apparatus; and a filter module that separates particulates and inert gas from the processable medium, the filter module comprising: a filter housing with a filter housing inlet that is fluidly connected to the filter device inlet to receive the processable medium; a primary filter mounted within an interior of the filter housing; a rotatable nozzle mounted to the filter housing and at least partially positioned within the primary filter; and a passivation system fluidly connected to at least one of the filter housing.

The filter device of any preceding clause, wherein the rotatable nozzle comprises: a pair of nozzle arms extending within the primary filter; and a nozzle inlet that provides a cleaning gas, wherein a plurality of nozzle arm outlets are distributed over the pair of nozzle arms to disperse the cleaning gas, wherein the primary filter and the rotatable nozzle are concentrically aligned about a center axis.

The filter device of any preceding clause, further comprising: an oxygen controller fluidly connected to the filter housing; a pressure controller fluidly connected to the filter housing; a temperature controller fluidly connected to the filter housing; a filter housing passivation gas inlet provided in a lower base of the filter housing for injecting a passivation gas into the filter housing; and a filter housing passivation gas outlet for discharging excess passivation gas within the filter housing.

A method of filtering particulates and inert gas from a processable medium, the method comprising: separating the particulates and the inert gas from the processable medium with a filter device comprising at least two filter modules; stopping a flow of the processable medium to one of the at least two filter modules; cleaning the particulates from a primary filter of the one of the at least two filter modules with a rotatable nozzle at least partially positioned within the primary filter; collecting the particulates in a collection container of the one of the at least two filter modules; and passivating the particulates collected in the collection container with a passivation gas.

The method of any preceding clause, wherein cleaning the particulates from the primary filter further comprises generating a cleaning gas pressure surge and evenly dispersing the cleaning gas pressure surge across the primary filter with the rotatable nozzle.

The method of any preceding clause, further comprising passivating the particulates separated from the processable medium in a filter housing of the one of the at least two filter modules.

The method of any preceding clause, further comprising wetting the passivation gas and injecting the wet passivation gas into the collection container.

The method of any preceding clause, wherein the passivation gas is a mixture of air and nitrogen or argon.

The method of any preceding clause, further comprising filtering the inert gas separated from the processable medium with the primary filter, filtering the inert gas filtered by the primary filter with a secondary filter, and returning the inert gas to a build chamber of an additive manufacturing apparatus.

The method of any preceding clause, further comprising removing the collection container from the one of the at least two filter modules, emptying the passivated collected particulates from the collection container, returning the collection container to the one of the at least two filter modules, and resuming the flow of the processable medium to the one of the at least two filter modules.

It will be apparent to those skilled in the art that various modifications and variations can be made to the embodiments described herein without departing from the scope of the claimed subject matter. Thus, it is intended that the specification cover the modifications and variations of the various embodiments described herein provided such modification and variations come within the scope of the appended claims and their equivalents.

## Claims

1. A filter device comprising:
a filter device inlet that receives a processable medium from an additive manufacturing apparatus; and
a filter module that separates particulates and inert gas from the processable medium, the filter module comprising:
a filter housing with a filter housing inlet that is fluidly connected to the filter device inlet to receive the processable medium;
a primary filter mounted within an interior of the filter housing;
a rotatable nozzle mounted to the filter housing and at least partially positioned within the primary filter, wherein the rotatable nozzle ejects a cleaning gas in a radial direction toward the primary filter during a cleaning operation;
a collection container fluidly connected to the filter housing; and
a filter device inert gas outlet that discharges the inert gas.

2. The filter device of claim 1, wherein the rotatable nozzle comprises:
a nozzle arm extending within the primary filter; and
a nozzle inlet that provides the cleaning gas to the nozzle arm.

3. The filter device of claim 2, wherein the rotatable nozzle comprises a pair of nozzle arms, a plurality of nozzle arm outlets are distributed over the pair of nozzle arms to disperse the cleaning gas.

4. The filter device of claim 2, wherein the primary filter and the rotatable nozzle are concentrically aligned about a center axis.

5. The filter device of any of claims 1-4, further comprising:
a pressure controller; and
a motor configured to rotate the rotatable nozzle; and
an electronic control unit communicatively coupled to the pressure controller and the pressure controller, the electronic control unit configured to:
receive a signal from the pressure controller indicating a pressure within the filter housing; and
in response to determining that the pressure within the filter housing is below a predetermined pressure threshold, send a signal to the motor to rotate the rotatable nozzle.

6. The filter device of any of claims 1-4, further comprising a locking mechanism to maintain a fluid connection between the filter housing and the collection container.

7. The filter device of any of claims 1-4, wherein the primary filter and the rotatable nozzle are concentrically aligned about a center axis.

8. The filter device of any of claims 1-4, further comprising a passivation system fluidly connected to at least one of the filter housing and the collection container.

9. The filter device of claim 8, wherein the passivation system comprises:
a filter housing passivation gas inlet provided in a lower base of the filter housing for injecting a passivation gas into the filter housing; and
a filter housing passivation gas outlet for discharging excess passivation gas within the filter housing.

10. The filter device of claim 8, wherein the passivation system comprises:
a container passivation gas inlet for injecting the passivation gas into the collection container; and
a container passivation gas outlet for discharging excess passivation gas within the collection container.

11. The filter device of claim 8, wherein the passivation system is fluidly connected to each of the filter housing and the collection container, passivation of the particulates separated from the processable medium occurs within the filter housing and passivation of collected particulates occurs within the collection container.

12. A method of filtering particulates and inert gas from a processable medium, the method comprising:
separating the particulates and the inert gas from the processable medium with a filter device comprising at least two filter modules;
stopping a flow of the processable medium to one of the at least two filter modules;
cleaning the particulates from a primary filter of the one of the at least two filter modules with a rotatable nozzle at least partially positioned within the primary filter; collecting the particulates in a collection container of the one of the at least two filter modules; and
passivating the particulates collected in the collection container with a passivation gas.

13. The method of claim 12, further comprising passivating the particulates separated from the processable medium in a filter housing of the one of the at least two filter modules.

14. The method of claim 12 or claim 13, further comprising:
wetting the passivation gas; and
injecting the wet passivation gas into the collection container.

15. The method of claim 12 or claim 13, further comprising:
filtering the inert gas separated from the processable medium with the primary filter;
filtering the inert gas filtered by the primary filter with a secondary filter; and
returning the inert gas to a build chamber of an additive manufacturing apparatus.
